# EUROPEAN PATENT APPLICATION

(11) **EP 4 063 947 A1**
(43) Date of publication of application: **28.09.2022**
(21) Application number: 20894433.0
(22) Date of filing: 26.11.2020
(51) Int. Cl.: G02F 1/1339

(54) **DISPLAY MODULE AND ELECTRONIC DEVICE**

(30) Priority: 29.11.2019 CN 201911205888
(71) Applicant: Vivo Mobile Communication Co., Ltd., Dongguan, Guangdong 523863 (CN)
(72) Inventor: BEI, Liangliang, Dongguan, Guangdong 523863 (CN); ZHANG, Xiang, Dongguan, Guangdong 523863 (CN)
(74) Representative: Petraz, Gilberto Luigi
(86) International application number: PCT/CN2020/131942
(87) International publication number: WO 2021/104404

(57) **Abstract**

This present invention discloses a display module and an electronic device, where the display module has a light-transmitting region, an outer edge region, and a display region, and the outer edge region is located between the light-transmitting region and the display region; and the display module includes a first substrate, a second substrate, a first support portion, and a second support portion, the first substrate and the second substrate are stacked, the first substrate is provided with a thin film transistor, the second substrate is provided with a color filter film, the first support portion and the second support portion are both disposed between the first substrate and the second substrate, a height of the first support portion is greater than a height of the second support portion, the first support portion is located in the display region, and the second support portion is located in the outer edge region.

## Description

### CROSS-REFERENCE TO RELATED APPLICATION

This application claims priority to Chinese Patent Application No. 201911205888.1 filed in China on November 29, 2019, which is incorporated herein by reference in its entirety.

### TECHNICAL FIELD

The present invention relates to the field of display technologies, and in particular, to a display module and an electronic device.

### BACKGROUND

With the progress of technologies and the development of electronic devices, users have greater demand for full-screen electronic devices. Therefore, full screens have gradually become a development trend.

Mounting positions of optical devices such as cameras, sensors, and light supplement lamps are the main factors restricting the development of full screens. To increase a screen-to-body ratio of an electronic device, a light-transmitting region may be disposed on a display module of the electronic device, and optical devices such as cameras may be disposed in a manner of facing the light-transmitting region, so as to implement functions of the optical devices.

Specifically, the display module may include a first substrate and a second substrate that are stacked. In order not to affect light transmittance of the light-transmitting region, another structure may be prevented as far as possible from being disposed between parts, located in the light-transmitting region, of the first substrate and the second substrate. Under the action of atmosphere pressure, the parts, located in the light-transmitting region, of the first substrate and the second substrate are prone to concave deformation. As a result, the optical performance at the light-transmitting region is affected, resulting in poor performance of an optical device.

### SUMMARY

The present invention discloses a display module and an electronic device, to resolve a problem of poor performance of optical devices.

To resolve the foregoing problem, an embodiment of the present invention discloses a display module. The display module has a light-transmitting region, an outer edge region, and a display region, and the outer edge region is located between the light-transmitting region and the display region;
and the display module includes a first substrate, a second substrate, a first support portion, and a second support portion, the first substrate and the second substrate are stacked, the first substrate is provided with a thin film transistor, the second substrate is provided with a color filter film, the first support portion and the second support portion are both disposed between the first substrate and the second substrate, a height of the first support portion is greater than a height of the second support portion, the first support portion is located in the display region, and the second support portion is located in the outer edge region; where
a direction of the height is a direction perpendicular to the first substrate.

An embodiment of the present invention further discloses an electronic device, including the foregoing display module and an optical device, where the optical device and the second substrate are respectively located on both sides of the first substrate, and the light-transmitting region and the optical device are disposed oppositely.

The technical solutions used by the present invention can achieve the following beneficial effects:

The display module disclosed in the present invention is provided with a second support portion, the second support portion is disposed in an outer edge region of the display module, and the outer edge region is adjacent to a light-transmitting region of the display module. Therefore, the second support portion may exert a supporting force on a first substrate and a second substrate, and when the first substrate and the second substrate are concavely deformed, under the action of the second support portion, a region where the concave deformation occurs may expand the light-transmitting region properly, so that deformation of the first substrate and the second substrate tends to be gentle, thereby reducing the deformation of the first substrate and the second substrate, and improving performance of an optical device.

### BRIEF DESCRIPTION OF DRAWINGS

The accompanying drawings described herein are used to provide further understanding of the present invention and constitute a part of the present invention. The illustrative embodiments of the present invention and descriptions thereof are used to explain the present invention, and do not constitute any improper limitation on the present invention. In the accompanying drawings:
FIG. 1 is a schematic structural diagram of a display module according to an embodiment of the present invention; and
FIG. 2 is a schematic structural diagram of a display module according to another embodiment of the present invention.

Reference numerals in the accompanying drawings are as follows:
A-Light-transmitting region, B-Outer edge region, 110-First substrate, 120-Second substrate, 130-First support portion, 140-Second support portion, 141-Support column, 142-Support film layer, and 150-Liquid crystal layer.

### DESCRIPTION OF EMBODIMENTS

To make the objectives, technical solutions, and advantages of the present invention clearer, the following clearly and completely describes the technical solutions of the present invention with reference to the specific embodiments of the present invention and the corresponding accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions disclosed by various embodiments of the present invention are described in detail below with reference to the accompanying drawings.

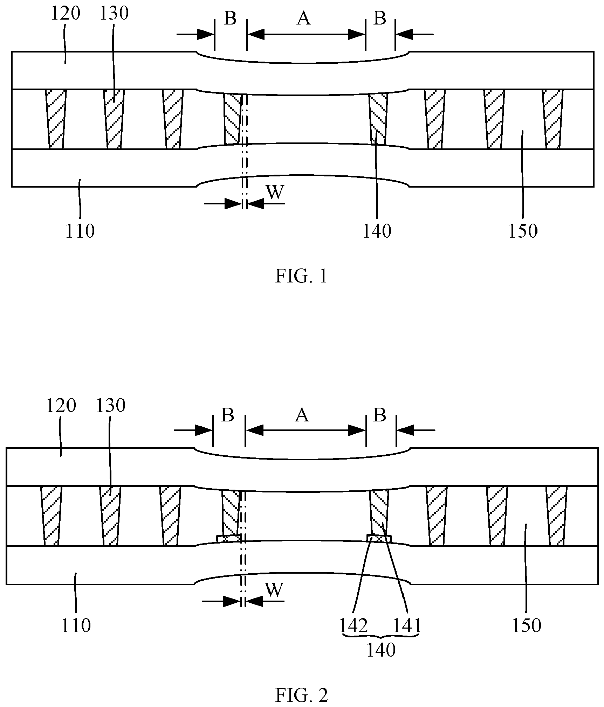

As shown in FIG. 1, an embodiment of the present invention discloses a display module. The display module may be applied to an electronic device having an optical device. The display module disclosed in this embodiment of the present invention has a light-transmitting region A, an outer edge region B, and a display region, and the outer edge region B is located between the light-transmitting region A and the display region. The light-transmitting region A and the optical device are disposed oppositely, so that light in an external environment may enter the optical device through the light-transmitting region A, or light emitted from the optical device may enter the external environment through the light-transmitting region A. The outer edge region B is disposed adjacent to the light-transmitting region A, and the outer edge region B may be specifically configured to allow a wiring structure to be disposed.

Specifically, the foregoing display module may include a first substrate 110, a second substrate 120, a first support portion 130, and a second support portion 140. The first substrate 110 and the second substrate 120 are stacked. Optionally, both the first substrate 110 and the second substrate 120 may use a glass plate, and the glass plate has relatively high light transmittance. The first substrate 110 is provided with a thin film transistor, and the thin film transistor may drive the display module. The second substrate 120 is provided with a color filter film, and the color filter film may filter light, so that light of a desired color is emitted.

The first support portion 130 and the second support portion 140 are both disposed between the first substrate 110 and the second substrate 120 and are both located outside the light-transmitting region A. Therefore, none of the first support portion 130 and the second support portion 140 herein affect light transmittance of the light-transmitting region A, so that the light-transmitting region A has relatively high light transmittance, and performance of the optical device is higher. A height of the first support portion 130 is greater than a height of the second support portion 140, the first support portion 130 is located in the display region, and the second support portion 140 is located in the outer edge region B. A direction of the height is a direction perpendicular to the first substrate 110. Optionally, there may be a plurality of first support portions 130, one end of the first support portion 130 may be connected to the second substrate 120, and the other end of the first support portion 130 may be in contact with the first substrate 110, so as to exert a larger force on the first substrate 110 and the second substrate 120. The height of the second support portion 140 is a preset height, and the preset height may be flexibly designed according to the height of the first support portion 130 and other factors. There may be one second support portion 140, one end of the second support portion 140 may be connected to the second substrate 120, and there is a gap between the other end of the second support portion 140 and the first substrate 110. When the first substrate 110 and the second substrate 120 are concavely deformed, the second support portion 140 may be in contact with the first substrate 110, so as to exert a supporting force on the first substrate 110 and the second substrate 120.

The foregoing outer edge region B is disposed adjacent to the light-transmitting region A. The second support portion 140 may exert a supporting force on the first substrate 110 and the second substrate 120, and when the first substrate 110 and the second substrate 120 are concavely deformed, under the action of the second support portion 140, a region where the concave deformation occurs may expand the light-transmitting region A properly, so that deformation of the first substrate 110 and the second substrate 120 tends to be gentle, thereby reducing the deformation of the first substrate 110 and the second substrate 120 in the direction perpendicular to the first substrate 110, improving optical performance at the light-transmitting region A, and improving performance of the optical device.

Optionally, the foregoing outer edge region B may surround the light-transmitting region A. In this way, in one aspect, appearance and texture of the display module may be improved, and in another aspect, larger space may be formed to allow the second support portion 140 to be disposed. During design of a structure of the display module, a disposing position of the second support portion 140 may be flexibly adjusted according to an actual situation, thereby simplifying the design of the display module and implementing a better supporting effect.

In an optional embodiment, the second support portion 140 includes a support column 141, and a height of the support column 141 is the preset height described above. In other words, in this embodiment, the second support portion 140 includes only the support column 141. Another film structure may be disposed on each of one side, facing the second support portion 140, of the first substrate 110 and one side, facing the second support portion 140, of the second substrate 120. When the second support portion 140 includes only the support column 141, parts, corresponding to the second support portion 140, in these film structures may be removed, so that the second support portion 140 may better exert a supporting force on the first substrate 110 and the second substrate 120.

As shown in FIG. 2, in another embodiment, the second support portion 140 may include the support column 141 and a support film layer 142. One of the first substrate 110 and the second substrate 120 is provided with the support column 141, and another is provided with the support film layer 142. The support column 141 and the support film layer 142 are arranged in the direction perpendicular to the first substrate 110, and a sum of the height of the support column 141 and a height of the support film layer 142 is equal to the preset height described above. In this case, the support column 141 and the support film layer 142 jointly implement a supporting function, thereby reducing deformation at the light-transmitting region A. The support film layer 142 may be a film structure that has been formed on the first substrate 110 or the second substrate 120. Therefore, in such a disposing manner, there is no need to remove a part, corresponding to the second support portion 140, in the film structure, thereby simplifying a molding process of the display module.

A material of the foregoing support film layer 142 may not be specifically limited, as long as the support film layer 142 can implement a supporting effect. Optionally, the support film layer 142 may be a metal layer, an inorganic layer, or an organic layer.

To enhance a supporting effect of the second support portion 140, a plurality of second support portions 140 may be disposed, and the plurality of second support portions 140 are disposed in the outer edge region B at intervals. As a quantity of second support portions 140 increases, a supporting area of the second support portions 140 increases accordingly, so that a supporting force exerted by the second support portions 140 on the first substrate 110 and the second substrate 120 is larger, and deformation of the first substrate 110 and the second substrate 120 in the direction perpendicular to the first substrate 110 is smaller, thereby further improving the performance of the optical device. Further, when the outer edge region B surrounds the light-transmitting region A, the plurality of second support portions 140 may be disposed at intervals along a direction surrounding the light-transmitting region A, so that a supporting force generated by the second support portions 140 is more evenly distributed in the outer edge region B.

In an optional embodiment, a gap W between an edge on one side, close to the light-transmitting region A, of the second support portion 140 and an edge of the light-transmitting region A ranges from 0 to 0.2 mm. In this case, a distance between the second support portion 140 and the light-transmitting region A is relatively small, so that the second support portion 140 may better slow down deformation of the first substrate 110 and the second substrate 120 at the light-transmitting region A, thereby reducing the deformation of the first substrate 110 and the second substrate 120 in the direction perpendicular to the first substrate 110 more effectively. Optionally, to enhance the effect, the gap W between the edge on the side, close to the light-transmitting region A, of the second support portion 140 and the edge of the light-transmitting region A is 0.1 mm.

As mentioned above, the first support portion 130 is disposed in the display region, and the height of the first support portion 130 is substantially equal to a distance between the first substrate 110 and the second substrate 120. Since an acting force exerted by the first support portion 130 on the first substrate 110 and the second substrate 120 is relatively large, the quantity of first support portions 130 should not be too large, but this may easily lead to an unsatisfactory supporting effect. Therefore, the display module further includes a third support portion, and the third support portion is also disposed between the first substrate 110 and the second substrate 120 and also located in the display region. A height of the third support portion is less than the height of the first support portion 130. Therefore, when the first substrate 110 and the second substrate 120 are not deformed, there is a gap between one end of the third support portion and the first substrate 110 or the second substrate 120, and the third support portion implements a supporting effect only when the deformation of the first substrate 110 and the second substrate 120 reaches a specific value, thereby improving the supporting effect.

When the foregoing third support portion is disposed, the height of the third support portion may be greater than the height of the second support portion 140, or may be less than the height of the second support portion 140, or certainly, may be equal to the height of the second support portion 140. To simplify a processing process of the display module, the height of the third support portion may be equal to the height of the second support portion 140, and in this case, the second support portion 140 and the third support portion may be processed simultaneously through the same process.

In addition, when the second support portion 140 includes the support column 141 and the support film layer 142, due to a function of the support film layer 142, the height of the support column 141 may be equal to the height of the third support portion. Therefore, the second support portion 140 and the third support portion may be formed simultaneously, thereby simplifying the processing process of the display module. Certainly, an additional support film layer 142 may additionally be disposed to enable the height of the support column 141 to be equal to the height of the third support portion, so that the second support portion 140 and the third support portion are formed simultaneously.

Optionally, the display module disclosed in this embodiment of the present invention may be a liquid crystal display module. In this case, the display module may further include a liquid crystal layer 150, and the liquid crystal layer 150 is disposed between the first substrate 110 and the second substrate 120. To guarantee the light transmittance of the light-transmitting region A, the liquid crystal layer 150 may be provided with holes corresponding to the light-transmitting region A, so that the liquid crystal layer 150 does not affect propagation of light. Certainly, the display module may be an organic light-emitting display module. This is not limited in this embodiment of the present invention.

An embodiment of the present invention further discloses an electronic device, including the display module according to any one of the foregoing embodiments and an optical device, where the optical device and the second substrate 120 are respectively located on both sides of the first substrate 110, and the light-transmitting region A and the optical device are disposed oppositely. Optionally, the optical device herein may include at least one of a fingerprint module, a camera, a sensor, and a light supplement lamp.

The electronic device disclosed in this embodiment of the present invention may be a smartphone, a tablet computer, an e-book reader, or a wearable device. Certainly, the electronic device may be another device. This is not limited in this embodiment of the present invention.

The embodiments of the present invention focus on describing differences between the embodiments, and different optimization features of the embodiments may be combined to form better embodiments provided that they are not contradictory. Considering brevity, details are not described herein again.

The foregoing descriptions are merely embodiments of the present invention, but are not intended to limit the present invention. Various changes and modifications may be made to the present invention by those skilled in the art. Any modification, equivalent replacement, or improvement made without departing from the spirit and principle of the present invention shall fall within the scope of claims of the present invention.

## Claims

1. A display module, wherein the display module has a light-transmitting region (A), an outer edge region (B), and a display region, and the outer edge region (B) is located between the light-transmitting region (A) and the display region; and
the display module comprises a first substrate (110), a second substrate (120), a first support portion (130), and a second support portion (140), the first substrate (110) and the second substrate (120) are stacked, the first substrate (110) is provided with a thin film transistor, the second substrate (120) is provided with a color filter film, the first support portion (130) and the second support portion (140) are both disposed between the first substrate (110) and the second substrate (120), a height of the first support portion (130) is greater than a height of the second support portion (140), the first support portion (130) is located in the display region, and the second support portion (140) is located in the outer edge region (B), wherein
a direction of the height is a direction perpendicular to the first substrate (110).

2. The display module according to claim 1, wherein the outer edge region (B) surrounds the light-transmitting region (A).

3. The display module according to claim 1, wherein a height of the second support portion (140) is a preset height, the second support portion (140) comprises a support column (141), and a height of the support column (141) is the preset height.

4. The display module according to claim 1, wherein a height of the second support portion (140) is a preset height, the second support portion (140) comprises a support column (141) and a support film layer (142), one of the first substrate (110) and the second substrate (120) is provided with the support column (141), another is provided with the support film layer (142), the support column (141) and the support film layer (142) are arranged in a direction perpendicular to the first substrate (110), and a sum of a height of the support column (141) and a height of the support film layer (142) is equal to the preset height.

5. The display module according to claim 1, wherein there are a plurality of second support portions (140), and the plurality of second support portions (140) are disposed in the outer edge region (B) at intervals.

6. The display module according to claim 1, wherein a gap between an edge on one side, close to the light-transmitting region (A), of the second support portion (140) and an edge of the light-transmitting region (A) ranges from 0 to 0.2 mm.

7. The display module according to claim 1, further comprising a third support portion, wherein the third support portion is disposed between the first substrate (110) and the second substrate (120), the third support portion is located in the display region, a height of the third support portion is less than the height of the first support portion (130), and the height of the third support portion is equal to the height of the second support portion (140).

8. The display module according to claim 1, further comprising a liquid crystal layer (150), wherein the liquid crystal layer (150) is disposed between the first substrate (110) and the second substrate (120).

9. An electronic device, comprising the display module according to any one of claims 1 to 8 and an optical device, wherein the optical device and the second substrate (120) are respectively located on both sides of the first substrate (110), and the light-transmitting region (A) and the optical device are disposed oppositely.

10. The electronic device according to claim 9, wherein the optical device comprises at least one of a fingerprint module, a camera, a sensor, and a light supplement lamp.
